(19) Europäisches Patentamt
European Patent Office
Office européen des brevets

(11) EP 4 300 393 A1

(12) EUROPEAN PATENT APPLICATION

(43) Date of publication:
03.01.2024 Bulletin 2024/01

(21) Application number: 22020623.9

(22) Date of filing: 22.12.2022

(51) International Patent Classification (IPC):
G06Q 10/08 (2023.01)     G06Q 10/10 (2023.01)
G06Q 50/06 (2012.01)     F17C 13/02 (2006.01)
G01F 17/00 (2006.01)

(52) Cooperative Patent Classification (CPC):
G06Q 50/06; F17C 13/02; F17C 13/028;
G01F 13/006; G06N 3/02; G06Q 10/0832;
G06Q 50/28

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Linde GmbH
82049 Pullach (DE)

(72) Inventors:
• Koch, Michael
  82049 Pullach (DE)

• Slaby, Oliver
  82049 Pullach (DE)
• Kireev, Vitalij
  82049 Pullach (DE)
• Nowagk, Michael
  82049 Pullach (DE)
• Kühn, Alexander
  82049 Pullach (DE)

(74) Representative: Imhof, Dietmar
Linde GmbH
Intellectual Property EMEA
Dr.-Carl-von-Linde-Straße 6-14
82049 Pullach (DE)

(54) **METHOD FOR LOSS DETECTION**

(57) The present invention relates to a method for detecting filling losses of a filling process, wherein in the filling process a mobile reservoir (2) is filled with a medium from a storage reservoir (1), e.g., of a process plant, holding the medium produced. In a first step filling process information and storage reservoir information is acquired (S100), which is then evaluated (S110) for each filling process. Afterwards, based on the evaluation of each filling process, a volume of medium lost in the filling process is determined (S120).

Fig. 2

EP 4 300 393 A1

**Description**

The invention relates to a method for detecting filling losses of a filling process and a corresponding computing unit, a computer program code and machine-readable storage medium.

Background

Loading systems for the management of loading and unloading processes of road tankers and rail tankers are known in the gas industry. An essential component of these loading systems can be a software package that processes and stores loadings worldwide each year, which makes the loading and unloading of medium like gas traceable and transparent. This typically is indispensable for food gases and the medical field. A quantitative monitoring of filling processes for process plants over sites, countries or regions, is not accomplished so far.

In view of the above an object is to provide a method or improved way for monitoring of filling processes for process plants.

Disclosure of the invention

This object is solved by a method for detecting filling losses of a filling process, and a computing unit with the features of the independent claims. Advantageous embodiments and developments are subject of the dependent claims as well as the following description.

A software system for processing and storing loadings enables efficient and secure operations as important steps are highly automated. Through continuous storage tank or reservoir and quality monitoring of the loads, it is possible to integrate the system into existing quality management processes and automatically create quality certificates according to customer requirements.

Air separation unit (ASU) production performance monitoring can be performed by focusing data evaluation on the primary efficiency areas of production, pipeline losses, liquid losses, power usage and product recovery. For the latter two, online models can be implemented, overall process first principle models and process equipment models, determining plant performance indicators, e.g. KPIs (key performance indicators) like power consumption and Argon Recovery, using Digital Twin calculations. Comparing the calculated KPIs with measurements, production inefficiencies can be tracked and plant performance can be quantified and compared between different ASU, plant sites, countries and regions. Additionally, these inefficiencies can be expressed in monetary units using local power prices and selling prices of products.

Using this approach, continuous improvements can be achieved by setting power and production gap targets to operators. Additionally, investment considerations, such as, for example, replacement of old turbomachinery, can be underpinned using this approach to make improvements transparent and can be quantitatively monitored after investment is done.

Further, for a pipeline loss area, an online model can be used to minimize losses of the gaseous product to vent.

For liquid production, it would be useful to benchmark the performance losses between the volume of produced liquid and the volume of liquid actually transported offsite and to a customer. Relying with the amount of lost liquid on a monthly comparison of the flowmeter production and the reported shipments does not provide good values. A flowmeter-based measurement of a liquid close to its boiling point is practically difficult and due to the different measurement principles, i.e. a flowmeter on production and a scale for the shipment, usually result in a high inaccuracy in the accounting.

ASU liquid products and other medium can be stored in storage reservoirs such as tanks located close to or at the process plant. For serving customers with liquid products, mobile reservoirs mounted on trucks, trains or ships can filled using cryogenic pumps, and product purity can be analysed and checked using analysers comparing measured results to purity requirements.

Plants using software for loading systems typically have a fully automated system, such that operators of the vehicles to which the mobile reservoir is mounted can process the filling fully automated without local personal. Besides the requirements on automatic filling process including automated certificate generation, losses during filling process are not quantitatively monitored so far. Production losses can be observed due to many different reasons, for example wrong filling operations by operators, defects or wrong instrumentation of filling equipment or even product theft by operators.

So far, no quantitative monitoring of filling processes is in place and ASU or other fillings cannot be tracked over sites, countries or regions, which would help to improve ASU performance and to achieve a quantitative approach for investment decisions.

Within the present invention, a method is suggested for detecting filling losses of a filling process. In the filling process, a mobile reservoir is filled with a medium from a storage reservoir. The storage reservoir can be one of a process plant, such as an ASU process plant, for example. The storage reservoir is holding (or storing) the medium, which is, e.g., produced at the process plant. In the filling process, a liquified gas, such as nitrogen, can be filled from a storage reservoir, e.g. a storage tank, of a process plant, in which the nitrogen is produced, into a mobile reservoir such as a tank mounted on a train, a truck or a reservoir of a ship.

In a first step, filling process information and storage reservoir information are acquired and subsequently evaluated for each filling process based on the acquired filling process information and storage reservoir information. Further, based on the evaluation of each filling process, a volume of medium lost in the filling process is determined.

As information of storage reservoir fillings for a specific product from a specific storage reservoir are typically already collected by the loading system software, a large quantity of information that can be used for truck filling efficiency monitoring is readily available.

Evaluation of filling times and malfunctions of equipment (e.g. via continuously not fulfilling purity requirements due to defect analysers), can be performed by statistically analysing the collected data, however detection of filling loss or theft is more complex. Therefore, to accurately detect filling losses, storage reservoir information is combined with filling process information to accurately detect losses.

Thus, the suggested method advantageously improves loss detection accuracy of a filling process and thereby, loss of medium during the filling process can be reduced. Therefore, the proposed method allows for optimization of the process as a whole, which leads to more medium being available as well as allowing optimized analysis of plants and thus deciding and tracking investments into process plants. Since filing losses also can occur with other storage reservoirs than such of process plants, e.g., from a liquid depot, this holds also true for other types of storage reservoirs.

According to an embodiment of the invention, the method further comprises determining a reason for the loss of medium, based at least on the determined volume of medium lost in the filling process, the filling process information and the storage reservoir information.

By further determining the reason for the loss of medium, the efficiency of the filling process can advantageously be improved, as the determined fault can be fixed and thereby, the loss of medium in the filling process can be reduced. Reasons for the loss of medium that can be detected are, for example, inefficient mobile reservoir loading management by bad filling organization, malfunctions in filling and/or analysis equipment, wrong operation of filling process by the driver of a vehicle like a truck (or road trailer), train (or railcar) or ship, resulting in high loss generation or robbery by the drivers. These reasons can be, for example, overcome by providing training to the operators/drivers and/or renewing faulty devices.

According to another embodiment of the invention, the step of determining the reason for the loss of medium is performed by statistically evaluating the determined volume of lost medium of one or more filling processes, the filling process information and the storage reservoir information.

Using statistical evaluation of one or more of the acquired information in combination with the determined volume of lost medium, for example by evaluating a relative loss of medium against the total load of the mobile reservoir, it can be determined which amount of loss is abnormal and should be flagged as faulty.

According to yet another embodiment of the invention, the step of determining a reason for the loss of medium is performed only for a relative loss of medium, wherein the relative medium loss is a ratio of the volume of medium lost in the filling process and a total volume of medium removed from the storage reservoir in the filling process, of above 5 %, preferably of above 2.5 %, especially preferably of above 1 %.

For example, a histogram showing the relative loss against the number of occurrences of a relative loss in a plurality of filling processes can be used to determine the relative loss at which the reason for the loss should also be determined. Using the generated data, overall filling performance evaluation with respect to individual fillings on a site, but also comparable evaluations of sites, countries and regions can be achieved and thus efficiency of the filling processes can be improved. Thereby, quantitative loss monitoring of filling process to individual fillings and/or drivers/operators, detection and avoidance of product robbery, improvement of individual vehicle driver capabilities by trainings, detection of filling equipment malfunctions like defect analysers or pumps, comparability of filling efficiency between sites, countries and regions, support of investment decisions and quantitative tracking of improvement can be achieved. Thus, the overall efficiency of filling process can be improved.

According to another embodiment of the invention, the filling process information includes one or more of: a date and/or a time of a filling, an identification of an operator performing the filling process, a type of the medium, an identification of the vehicle comprising the mobile reservoir, a maximum capacity of the mobile reservoir, a capacity level of the mobile reservoir, a capacity level change rate of the mobile reservoir. The operator is, in many cases, the same person as the operator of the vehicle to which the mobile reservoir is mounted, as modern filling process are mostly performed automatically.

According to an embodiment of the invention, the storage reservoir information includes one or more of the following: a maximum capacity of the storage reservoir, a capacity level of the storage reservoir, a capacity level change of the storage reservoir, a capacity level change rate of the storage reservoir, a plant production volume of the medium, a plant production rate of the medium, a date and time of one or more filling processes.

The capacity level changes describe the level of medium in the mobile reservoir or storage reservoir before and after the filling, while the change rate refers to the capacity level change of the medium overtime, i.e. can be calculated by dividing the capacity level change by the time required for filling the mobile reservoir from the storage reservoir.

By including capacity level changes of the mobile reservoir and the storage reservoir, as well as plant production values, filling losses can be tracked and statistically evaluated and even tracking individual operators is possible, whereby the abovementioned reasons for loss of medium can be accurately determined and the overall efficiency of the filling process can be improved.

According to another embodiment of the invention, the step of evaluating each filling process is performed using a mass balance. In particular, the following mass balance equation can be used:

$$L_{Tank}(t_{end}) = L_{Tank}(t_{start}) + P \cdot (t_{end} - t_{start}) - F \tag{1}$$

where $L_{Tank}(t)$ is the capacity level of the storage reservoir at time $t$, $t_{end}$ is the time at the end of the filling process, $t_{start}$ is a time at the start of the filling process, P is the plant production rate of the medium per time unit of the process plant and $F$ is a volume of medium removed from the storage reservoir.

According to another embodiment of the invention, the plant production rate of the medium is estimated based on the capacity level changes of the storage reservoir between filling processes. The estimation of the plant production rate of the medium is, in particular, determined by fitting capacity level changes of the storage reservoir. In a preferred aspect, the storage reservoir changes are fitted by a time series analysis method, preferably a linear approximation. Also, fitting methods like linear or spline interpolation but also modern machine learning methods like Neuron Network fittings may be used.

As pointed out above, flowmeter-based measurement of a liquid close to its boiling point is difficult and inaccurate. However, as capacity levels of the storage reservoir can be detected more accurately, by estimating the plant production rate and using a mass balance to track the volume changes of the medium, the detection of loss of medium can be monitored accurately and thereby, the efficiency of filling process can be improved.

According to another embodiment of the invention, the medium comprises at least one of nitrogen, hydrogen, liquified hydrogen, carbon dioxide, liquified carbon dioxide, oxygen, argon and/or methane wherein the process plant is one of a process plant comprising air separation units, a $CO_2$ process plant or a hydrogen process plant.

Thus, the method is not restricted to a specific type of process plant or medium, but can flexibly executed for various different process plants and/or media.

A computing unit according to the invention, is configured, in particular programmatically, to execute a method according to any of the previous aspects.

The implementation of a method according to the invention in the form of a computer program code or computer program product with program code for carrying out all method steps is also advantageous, since this causes particularly low costs, especially if an executing control unit is still used for further tasks and is therefore present anyway. Finally, a machine-readable storage medium is provided with a computer program stored thereon as described above. Suitable storage media or data carriers for providing the computer program are, in particular, magnetic, optical and electrical memories, such as hard disks, flash memories, EEPROMs, DVDs and the like. It is also possible to download a program via computer networks (Internet, intranet, etc.). Such a download can take place wired or wirelessly (e.g. via a WLAN network, a 3G, 4G, 5G or 6G connection, etc.).

Further advantages and aspects of the invention will be apparent from the accompanying drawings and their description.

The invention is schematically illustrated by means of aspect examples in the drawing and is described in the following with reference to the drawing.

Short description of the drawings

Figure 1 shows a block diagram illustrating a filling process at a storage reservoir;

Figure 2 shows a block diagram illustrating the steps during a filling process;

Figure 3 shows a flowchart of an embodiment of the present invention;

Figure 4a shows a histogram illustrating the relative loss of medium against the loading of the mobile reservoir; and

Figure 4b shows a filling level of a storage reservoir over time.

Embodiments of the invention

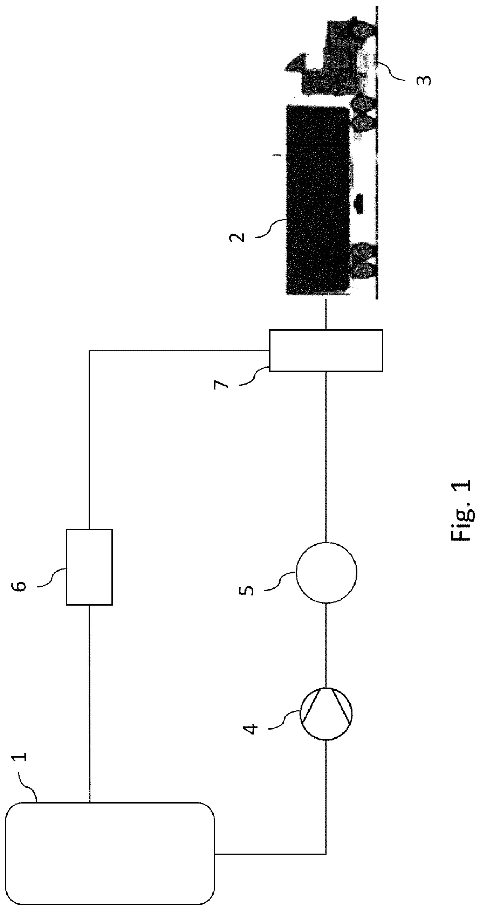

Figure 1 shows a block diagram illustrating a filling process at a storage reservoir 1 in an exemplary embodiment. The medium from the storage reservoir 1 is filled into a mobile reservoir 2, e.g. a tank, mounted on a vehicle 3, by means of example shown as the tank of a truck. The medium is pumped into the mobile reservoir 2 by a pump 4, which can be a cryogenic pump, while the purity of the medium is checked by analysis instruments 5, to ensure the desired purity level is achieved.

The filling process can be started and stopped by an operator of the vehicle 3 at a filling station 7. To control the filling process, the operator of the vehicle 3 first has to identify himself and the vehicle at the filling station 7. Further, the filling station 7 receives information about the capacity of the mobile reservoir 2, i.e. the maximum capacity level and current capacity level (filling level) of the mobile reservoir 2.

Further, a computing unit 6 is shown, which receives storage reservoir information from sensors or a separate computing unit of the storage reservoir 1 and filling process information from the filling station 7 and determines, based on the received information, a loss of medium and potentially a reason for the loss medium.

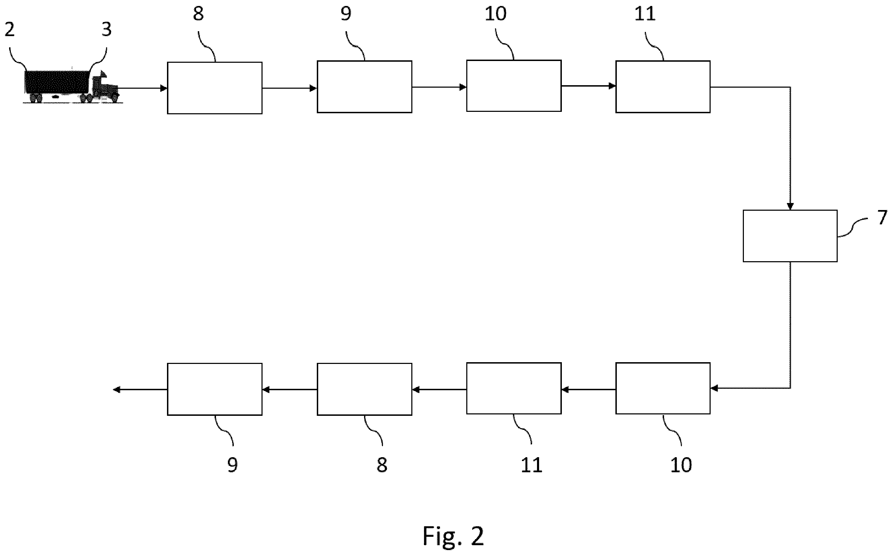

Figure 2 shows a schematic view of a filling process in an exemplary embodiment. Therein, a mobile reservoir 2 mounted on a vehicle 3, by means of example shown as the tank of a truck, is transferred from a customer to a gate column 8 of a process plant, where the operator of the vehicle 3 can open a gate 9 through which the vehicle 3 is entered into the process plant. In a next step, the vehicle 3 in its original state (i.e., before filling) is weighed on a scale 10, which the driver can operate from the weighing station 11, to determine a base point for estimating an amount of medium filled into the tank and generate a weighing bill. Afterwards, the mobile reservoir 2 is brought to a filling station 7 with a storage reservoir 1 (not shown in Figure 2) and is filled with the desired medium. In the filling station 7, analysis instruments 5 (not shown in Figure 2) are present to determine a purity of the medium and, based on the measurements of, e.g. a flowmeter, the volume of medium filled into the mobile reservoir 2. Afterwards, the vehicle 3 is driven onto a scale 10 again, to determine the final weight of the truck, i.e. of the mobile reservoir 2, and thereby determine the amount of medium filled into the mobile reservoir 2. Next, the mobile reservoir 2 is moved out of the process plant through the gate 8 opened by the operator at the gate column 9 and is transported to a customer, where the mobile reservoir 2 can be depleted and another storage reservoir can be filled.

During this filling process, a large amount of data is gathered. However, if such available data is inaccurate, it does not allow an accurate determination of the loss of medium and the reason for the loss of medium. A statistical method makes sense in particular if many loadings are evaluated. Due to inaccuracy of the individual loading data, the determination of the loss is not accurate for a single loading, but can become statistically significant for a plurality of loadings.

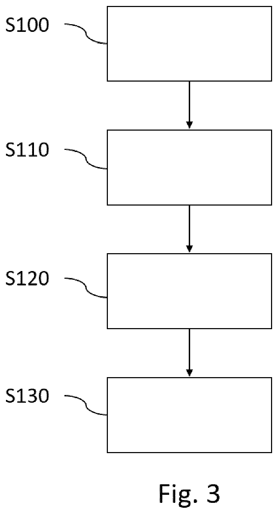

Figure 3 shows a flowchart of an embodiment of the present invention, in particular a method for determining the loss of medium during a filling process, for example a filling process as laid out with regard to Figure 1, i.e. a filling process in which medium is filled from a storage reservoir of a process plant into a mobile reservoir mounted, e.g., on a truck, a train or a ship.

The medium filled in these filling process can be any of nitrogen, hydrogen in gaseous or liquid form, carbon dioxide in gaseous or liquid form, oxygen, argon and/or methane, wherein the corresponding process plant is one comprising air separation units, a $CO_2$ process plant or a hydrogen process plant.

In a first step (S100), filling process information and storage reservoir information is acquired. The filling process information includes, for example, one or more of a date and/or a time of a filling, an identification of an operator performing the filling process, a type of the medium, an identification of the vehicle holding the mobile reservoir, a maximum capacity of the mobile reservoir, a capacity level of the mobile reservoir, a capacity level change rate of the mobile reservoir. In particular, the operator performing the filling process is the same person as the operator of the vehicle on which the mobile reservoir is mounted, i.e. a truck, a train or a ship. Further, by providing information about the vehicle and/or the operator of the vehicle, it can be determined, whether the mobile reservoir has a leakage, in particular which mobile reservoir has a leakage, and/or whether the operator is performing the filling process wrongly. Further, the maximum capacity of the mobile reservoir can be used to determine whether losses of medium increase and/decrease based on the relative current capacity, i.e. the ratio of the filling of the mobile reservoir to the maximum capacity.

The storage reservoir information includes one or more of a maximum capacity of the storage reservoir, a capacity level of the storage reservoir, a capacity level change of the storage reservoir, a capacity level change rate of the storage reservoir, a plant production volume of the medium, a plant production rate of the medium, a date and time of one or more filling processes. In particular, the capacity level and the capacity level change of the storage reservoir can be used to determine the amount of medium produced by the process plant between fillings.

In a second step (S110), the acquired data is evaluated. The evaluation is particularly performed by using a mass balance with a mass balance equation as shown in Eq. (1) above. The mass balance requires the plant production rate of the medium, which can be estimated based on tank the capacity level changes of the storage reservoir of the tank of the plant between fillings processes from the tank of the plant into a mobile reservoir, e.g. a tank of a truck. In particular, the estimation of the plant production rate of the gas medium is determined by fitting tank capacity level changes of the storage reservoir of the tank of the plant, especially by a time series analysis method, preferably a linear approximation.

Based on the evaluation, a volume of lost medium can be determined (S120) in a next step. The determined volume is, in particular, more accurate than a measurement performed by a flowmeter and thus, the efficiency of the filling process can be improved, as the loss of medium can be correlated with the remaining information contained in the filling process information and storage reservoir information.

Therefore, in a next step (S130), a reason for the loss of medium is determined, based at least on the determined volume of medium lost in the filling process, the filling process information and the storage reservoir information. This is done in particular by statistically evaluating the determined volume of medium, the filling process information and the storage reservoir information. To save calculation capacity of a computing unit, the determination of the reason for the loss of medium is performed only for a relative loss of medium, wherein the relative medium loss is a ratio of the volume of medium lost in the filling process and a total volume of medium removed from the storage reservoir in the filling process, of above 5%, preferably of above 2.5%, especially preferred of above 1%.

By performing the determination of the loss of medium (S120) and determining a reason for the loss of medium (S130), quantitative loss monitoring of filling process to individual fillings and/or drivers/operators of the vehicle, detection and avoidance of product robbery, as well as improvement of the capabilities of individual operator of a vehicle onto which a mobile reservoir is mounted by trainings, detection of filling equipment malfunctions like defect analysers or pumps, comparability of filling efficiency between sites, countries and regions and support of investment decisions and quantitative tracking of improvement can be achieved. Hence, the overall efficiency of filling process can be improved and the amount of medium produced and delivered to customers can be more accurately tracked, such that a solid basis for new investments and the tracking of performed investments is provided.

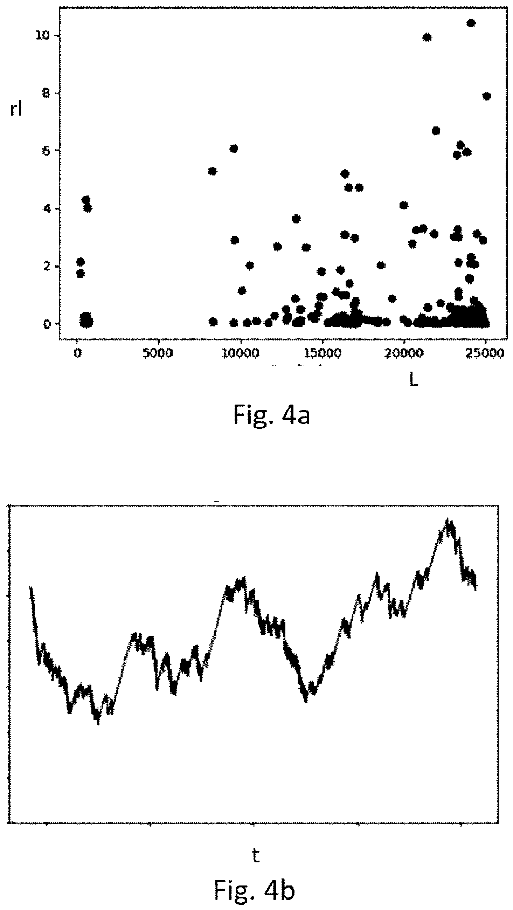

Figure 4a shows an exemplary histogram illustrating the relative loss rl (in %) of medium of several filling processes against the loading L (l kg) of the mobile reservoir 2. The histogram shows the overall filling performance with respect to losses. Using the generated data, overall filling performance can be evaluated, e.g. in step S110, with respect to individual fillings on a site but also comparable evaluations of sites, countries and regions can be achieved. Further, this data of individual filling process can be combined with, for example, the identity of truck operators to specifically provide training of these operators. Additionally, evaluation can be restricted to high filling losses, e.g. for losses above 5%, and the data points of these high losses may be considered for a more detailed evaluation of its reasons.

Figure 4b shows an exemplary filling level tl of a storage reservoir 1 over time t. From this data, the plant production rate can be estimated by fitting the data between fillings. The fitting can be performed using a by a time series analysis method, preferably a linear approximation. The estimated plant production rate between fillings can then be used in the evaluation of each filling by a mass balance, in particular by using the mass balance equation shown in Eq. (1).

## Claims

1. Method for detecting filling losses of a filling process, wherein in the filling process a mobile reservoir (2) is filled with a medium from a storage reservoir (1), preferably of a process plant, the storage reservoir (1) holding the medium, the method comprising the following steps:

   acquiring (S100) filling process information and storage reservoir information; evaluating (S110) each filling process based on the filling process information and the storage reservoir information; and
   determining (S120), based on the evaluation of each filling process, a volume of medium lost in the filling process.

2. Method according to claim 1, wherein the method further comprises the step of: determining (S130) a reason for the loss of medium, based at least on the determined volume of medium lost in the filling process, the filling process information and the storage reservoir information.

3. Method according to claim 2, wherein the step of determining (S130) the reason for the loss of medium is performed by statistically evaluating the determined volume of medium lost, the filling process information and the storage reservoir information.

4. Method according to claim 2 or 3, wherein the step of determining (S130) a reason for the loss of medium is performed only for a relative loss of medium, wherein the relative medium loss is a ratio of the volume of medium lost in the filling process and a total volume of medium removed from the storage reservoir (1) in the filling process, of above 5%, preferably of above 2.5%, especially preferably of above 1%.

5. Method according to any of the preceding claims, wherein the filling process information includes one or more of: a date and/or a time of a filling, an identification of an operator performing the filling process, a type of the medium, an identification of a vehicle comprising the mobile reservoir (2), a maximum capacity of the mobile reservoir (2), a capacity level of the mobile reservoir (2), a capacity level change rate of the mobile reservoir (2).

6. Method according to any of the preceding claims, wherein the storage reservoir information includes one or more of the following: a maximum capacity of the storage reservoir (1), a capacity level of the storage reservoir (1), a capacity level change of the storage reservoir (1), a capacity level change rate of the storage reservoir (1), a plant production volume of the medium, a plant production rate of the medium, a date and time of one or more filling processes.

7. Method according to any of the preceding claims, wherein the step of evaluating (S110) each filling process is performed using a mass balance.

8. Method according to claim 7, wherein the step of evaluating (S110) each filling process is performed by using the following mass balance equation:

$$L_{Tank}(t_{end}) = L_{Tank}(t_{start}) + P \cdot (t_{end} - t_{start}) - F$$

where $L_{Tank}(t)$ is the capacity level of the storage reservoir (1) at time t, $t_{end}$ is the time at the end of the filling process, $t_{start}$ is a time at the start of the filling process, P is the plant production rate of the medium per time unit of the process plant and F is a volume of medium removed from the storage reservoir (1).

9. Method according to claim 8, wherein the plant production rate of the medium is estimated based on the capacity level changes of the storage reservoir (1) between filling processes.

10. Method according to claim 9, wherein the estimation of the plant production rate of the medium is determined by fitting capacity level changes of the storage reservoir (1).

11. Method according to claim 10, wherein the capacity level changes of storage reservoir (1) are fitted by a time series analysis method, preferably a linear approximation.

12. Method according to any one of the preceding claims, wherein the medium comprises at least one of nitrogen, hydrogen, carbon dioxide and methane; and/or wherein the process plant is one of a process plant comprising air separation units, a $CO_2$ process plant and a hydrogen process plant.

13. Computing unit (6) configured to perform the method according to any of the preceding claims.

14. Computer program that causes a computing unit (6) to perform all of the steps of a method according to any one of claims 1 to 12 when executed on the computing unit.

15. Computer-readable storage medium on which the computer program code according to claim 14 is stored.

Fig. 1

Fig. 2

Fig. 3

Fig. 4a

t

Fig. 4b

Europäisches
Patentamt

European
Patent Office

Office européen
des brevets

# EUROPEAN SEARCH REPORT

Application Number

EP 22 02 0623

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/117135 A1 (ROGERS WARREN F [US] ET AL) 17 June 2004 (2004-06-17)<br>* paragraph [0017] – paragraph [0018] *<br>* paragraph [0028] – paragraph [0049] *<br>* paragraph [0054] – paragraph [0057] *<br>* paragraph [0071] – paragraph [0071] *<br>* paragraph [0119] – paragraph [0121] *<br>* figure 1 * | 1–15 | INV.<br>G06Q10/08<br>G06Q10/10<br>G06Q50/06<br>F17C13/02<br>G01F17/00 |
| X | BAHADORI A ET AL:  "Estimation of displacement losses from storage containers using a simple method",<br>JOURNAL OF LOSS PREVENTION IN THE PROCESS INDUSTRIES, ELSEVIER, UNITED KINGDOM,<br>vol. 23, no. 2, 1 March 2010 (2010-03-01),<br>pages 367–372, XP026893047,<br>ISSN: 0950-4230, DOI:<br>10.1016/J.JLP.2009.10.003<br>[retrieved on 2009-10-28]<br>* abstract *<br>* page 1, column 1, paragraph 1 – page 1, column 1, paragraph 1 * | 1–15 | |
| X | US 2022/307652 A1 (EWAN JAMES M [US] ET AL) 29 September 2022 (2022-09-29)<br>* paragraph [0021] – paragraph [0021] *<br>* paragraph [0031] – paragraph [0031] *<br>* paragraph [0036] – paragraph [0036] *<br>* paragraph [0048] – paragraph [0048] *<br>* paragraph [0050] – paragraph [0052] *<br>* paragraph [0086] – paragraph [0089] *<br>* figures 1a, 1b, 3d * | 1–15 | TECHNICAL FIELDS SEARCHED (IPC)<br><br>G06Q<br>G01F<br>F17C |

The present search report has been drawn up for all claims

| Place of search | Date of completion of the search | Examiner |
|---|---|---|
| Munich | 25 May 2023 | Melis, Caterina |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
    ..................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 02 0623

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2023

| Patent document cited in search report | | Publication date | Patent family member(s) | | Publication date |
|---|---|---|---|---|---|
| US 2004117135 | A1 | 17-06-2004 | NONE | | |
| US 2022307652 | A1 | 29-09-2022 | EP | 4041675 A1 | 17-08-2022 |
| | | | US | 11236864 B1 | 01-02-2022 |
| | | | US | 2022146048 A1 | 12-05-2022 |
| | | | US | 2022307652 A1 | 29-09-2022 |
| | | | WO | 2022093289 A1 | 05-05-2022 |

EPO FORM P0459

For more details about this annex : see Official Journal of the European Patent Office, No. 12/82